# NEW EUROPEAN PATENT SPECIFICATION

(11) **EP 0 560 773 B2**
(45) Date of publication and mention of the opposition decision: **05.12.2001**
(45) Mention of the grant of the patent: 09.04.1997
(21) Application number: 91916547.2
(22) Date of filing: 26.08.1991
(51) Int. Cl.: B60K 37/04

(54) **Reflection minimizing apparatus comprising a display unit of a vehicle dashboard**
Einrichtung zur Minderung von Reflektionen, die eine Anzeigeeinheit eines Kraftfahrzeugs umfasst
Appareil servant à réduire des réflexions, comportant un écran d'un tableau de bord de véhicule

(30) Priority: 30.08.1990 SE 9002766
(43) Date of publication of application: 22.09.1993
(73) Proprietor: Volvo Car Corporation, 405 31 Göteborg (SE)
(72) Inventor: BILLIG, Jan, S-413 01 Göteborg (SE); HALLEN, Anders, S-430 41 Kullavik (SE)
(74) Representative: Harrison, Michael Charles
(86) International application number: SE9100561
(87) International publication number: WO9204202

(56) References cited:
- EP-A- 0 344 968
- DE-C- 3 225 362
- GB-A- 1 108 411
- JP-A- 62 101 537
- US-A- 3 728 007
- US-A- 4 225 005
- US-A- 4 521 078
- SAE J941
- VDO-Information "Opto-elektronische Anzeigen", VDO Adolf Schindling AG, Schwalbach (DE), September 1979, pages 6 and 7

## Description

The present invention relates to a reflection minimising apparatus comprising a display unit having a, display surface thereon. In particular, the apparatus has the purpose of minimizing initial surface reflections which can be reflected from the surroundings via a reflecting surface of an electronic display screen in a direction towards a given observation position. The invention is primarily intended to be used to avoid those initial surface reflections which are visible to the observer in the glass display screen of an electronic display unit mounted on the dashboard of a vehicle.

The use of electronic display units is continuously increasing. The use of such units in vehicles has until now been relatively limited, though it is generally seen to have large potential. Particularly when used in vehicles, it is important that the legibility is as good as possible. The higher the legibility, the shorter the time that is necessary to assimilate the information which is displayed on the screen. Accordingly, the shorter the period of distraction, the safer the driver is. One aspect which can have a negative effect on the legibility is light reflection on the display surface of the unit. This problem has been recognized for a long time and a plurality of measures have been suggested for its solution, such as glare treatment and matting of the display screen's surface.

A method is known from US-A-4 521 078 to avoid surface reflections which are visible to an observer on the surface of an electronic display which is mounted on the dashboard of a vehicle. This known method makes use of the fact that the windows of a vehicle are located relatively high up in relation to the dashboard and that the light which enters into the car can therefore be reflected in small quantities to the observer's position if the display surface of the display unit is angled such that it forms an angle which is less than 90° in relation to the light path from the observer's eye to the surface of the information screen and further that it forms an angle less than 90° in relation to the longitudinal axis of the vehicle. The main part of the reflected light path is in such a case reflected to a region which is lower than the observation position. This known method accordingly minimizes the majority of the direct reflections which could bother the observer. In addition to this measure, the outer surface of the electronic display screen is provided with a polarizing filter to reduce to a certain extent indirect reflections in the display screen.

A polarizing filter reduces however only a small quantity of the indirect reflected light and is accordingly not a perfectly satisfactory solution. The risk thus remains that even with such a known device a reflection which is disturbing for the driver can arise in the display surface of the electronic display unit.

A known method to totally avoid disturbing reflections, even indirect reflections, is shown in DE-C-32 25 362. In this method the display is placed in a shielded recess sunk into the dashboard. Such a solution is however not preferred due to size, difficulties of use and cost reasons.

The object of the present invention is to provide an apparatus which reduces driver distraction, in particular by minimizing surface reflections.

A further object of the present invention is to provide an apparatus which is easy to use, demands a limited space and which meets certain aesthetic requirements.

Said object is achieved by means of an apparatus according to claim 1.

Preferred features of the invention are defined in the dependent claims.

### Brief description of the drawings:

The invention will be described in more detail with help of embodiments with reference to the annexed drawings in which
- Fig. 1: is a schematic view of a cross-section through a vehicle which is equipped with a device according to the invention,
- Fig. 2: shows a preferred embodiment of the invention in a stowed position and
- Fig. 3: shows the same device as in Fig. 2 but in a folded out position.

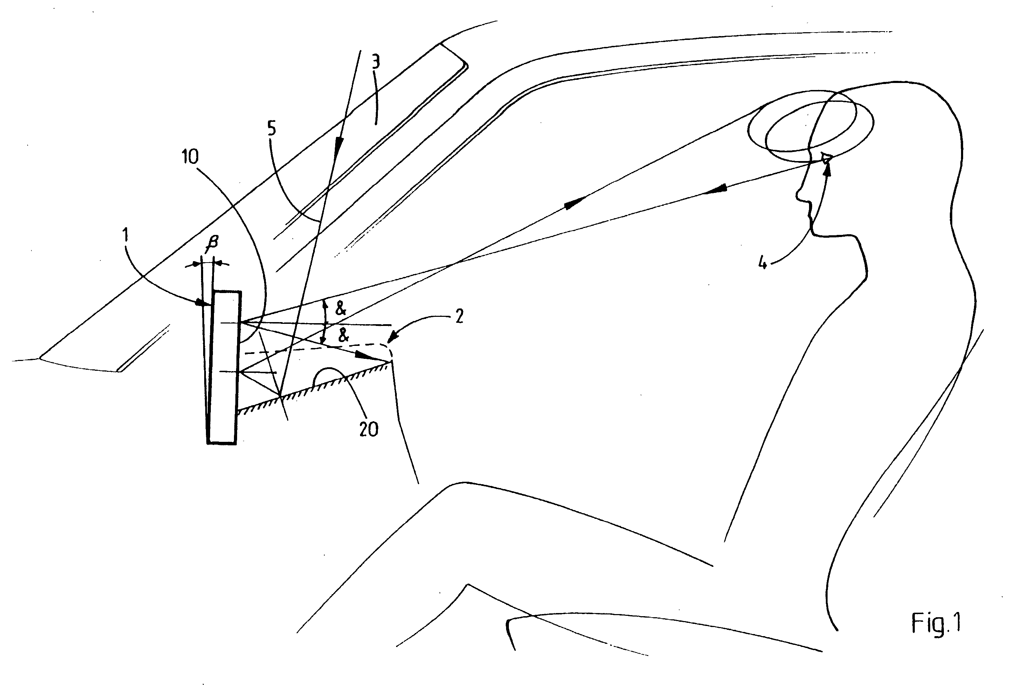

Fig. 1 shows a longitudinal schematic cross-section through a vehicle which is equipped with an electronic display unit 1. The display unit 1 is mounted on the dashboard 2 under the rearwardly angled windscreen 3. An observer's eye position (not shown) is indicated in principle with the aid of two overlapping ellipses 4. Each ellipse indicates for a certain body angle the region above and below respectively which 95% of drivers eyes, in a sitting position, are located in respect to a tangent which coincides with the line of sight to the object, in accordance to SAE J941. The schematically shown driver is therefore a borderline case.

The purpose of the present invention is, in addition to direct reflections, to also minimize indirect reflections which can reach the eyes of the observer, i.e. the ellipses 4, via the display surface 10 of the display unit. Reference numeral 5 denotes a light beam which, if reflected in the upper surface of the dashboard 2, would give an indirect reflection via the surface 10 of the display unit to the observer position 4. Since, in accordance with the present invention, a surface 20 is a low-reflection surface, it is however possible to minimize such an indirectreflection. The figure further shows that the display surface 10 forms a small acute angle β with the vertical and is directed downwardly. Furthermore, in a preferred embodiment, the display unit is foldably arranged upwards and downwards which will be further explained in the following.

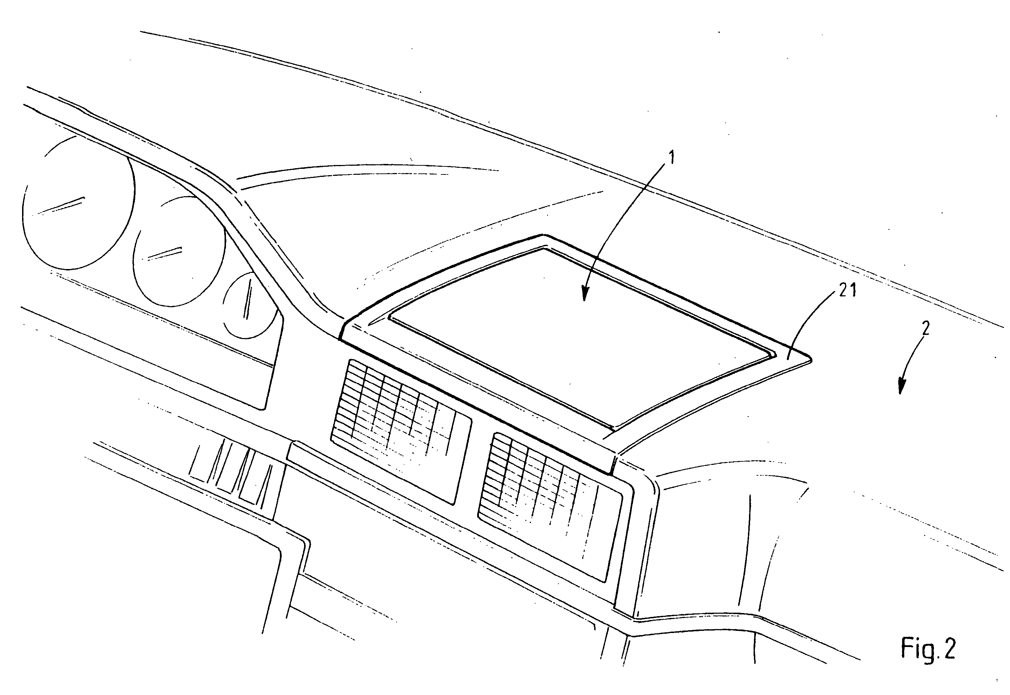

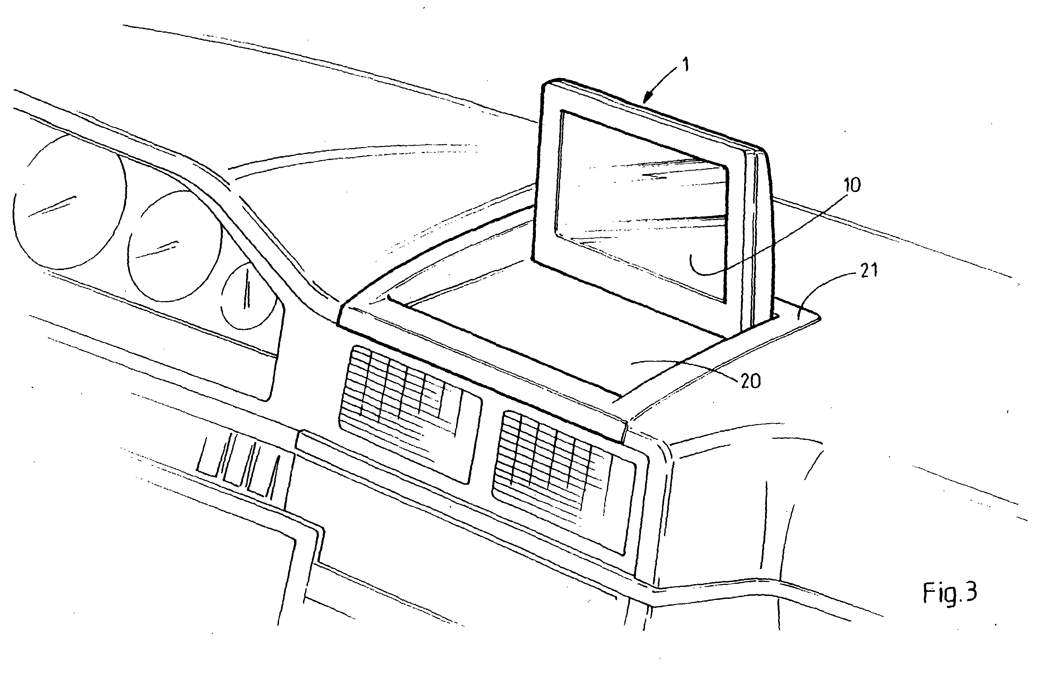

A preferred embodiment of the invention is shown in Fig. 2 in a folded-down position. A frame 21 is arranged in a sunken position in the upper surface of the dashboard 2. A display unit 1 is retractably arranged within this frame unit 21. During deployment of the display unit, the display unit is swung upwardly (manually or automatically) less than 90° to the position which is shown in Fig. 3. The display unit is provided with means (not shown) for maintaining it in the active position. Said means can be chosen from a plurality of already known suitable applications, such as pivotable support legs, telescopic arms, pinion drive (pinion and electric motor), etc. The lower part 20 of the dashboard which is located both underneath and in front of (in the direction towards the driver) the display screen surface 10 is a low-reflection surface, i.e. a surface which when reflected in the display unit's display surface does not worsen the legibility for the driver of the information displayed thereon.

The low-reflection surface 20 can for example be achieved by means of serration, matt black colouring, low reflecting material, etc. The skilled man will recognize that the low-reflection surface 20 can either be formed as an integral part of the dashboard in a vehicle, or as a separate element intended for subsequent fitting.

## Claims

1. A reflection minimizing apparatus comprising a display unit (1) having a display surface (10) thereon, and a frame (21) arranged in a sunken position in the upper surface of a vehicle dashboard, said display unit (1) being arranged for use in a substantially vertical position and wherein said display surface (10) is downwardly angled with respect to the vertical by a small acute angle (β), and a surface (20) being a low-reflection surface for minimizing reflections of incident light beams, said surface (20) being arranged both beneath and in front of said display surface (10) and extending at an acute angle thereto when said display unit (1) is arranged in its substantially vertical position, wherein said substantially vertical position of said display unit (1) is selected such that an imaginary axis extending perpendicularly to said display surface (10) is disposed to intersect a plane defined by said low reflection surface (20), and wherein said display unit (1) includes a bottom portion and a top portion and that said surface (20) comprises a front portion which is substantially adjacent to said bottom portion of the display unit (1).

2. The reflection minimizing apparatus of claim 1, **characterized in that** said low-reflection surface (20) further comprises a rear portion spaced from said display unit (1), and that said low-reflection surface (20) extends at a predetermined angle downwardly with respect to the horizontal from said rear portion towards said front portion thereof.

3. The reflection minimizing apparatus according to either claim 1 or claim 2, **characterized in that** said low-reflection surface (20) comprises serrations.

4. The reflection minimizing apparatus according to any one of the preceding claims, **characterized in that** said low-reflection surface (20) comprises a matt black colour.

## Patentansprüche

1. Einrichtung zur Minderung von Reflexion umfassend: eine Anzeigeeinheit (1) mit einer darauf befindlichen Anzeigeoberfläche (10) und einen Rahmen (21), welcher in einer versenkten Position in der Oberfläche eines Kraftfahrzeug-Armaturenbretts (2) angeordnet ist, wobei die Anzeigeeinheit (1) zur Verwendung in einer im wesentlichen vertikalen Position angeordnet ist und wobei die Anzeigeoberfläche (10) unter einem kleinen spitzen Winkel (β) im Bezug zur Vertikalen abwärts geneigt ist, und eine Fläche (20), die eine Niedrigreflexionsfläche zur Minderung von Reflexionen einfallender Lichtstrahlen ist, wobei die Fläche (20) sowohl unterhalb als auch vor der Anzeigeoberfläche (10) angeordnet ist und sich, wenn die Anzeigeeinheit (1) in ihrer im wesentlichen vertikalen Position angeordnet ist, hierzu in einem spitzen Winkel erstreckt, wobei die im wesentlichen vertikale Position der Anzeigeeinheit (1) dergestalt gewählt ist, daß eine sich senkrecht zur Anzeigeoberfläche (10) erstreckende imaginäre Achse angeordnet ist, dass sie eine durch die Niedrigreflexionsfläche (20) definierte Ebene schneidet, und wobei die Anzeigeeinheit (1) einen unteren Abschnitt und einen oberen Abschnitt beinhaltet und die Fläche (20) einen vorderen Abschnitt umfaßt, welcher im wesentlichen benachbart zum unteren Abschnitt der Anzeigeeinheit (1) ist.

2. Einrichtung zur Minderung von Reflexion nach Anspruch 1, **dadurch gekennzeichnet, daß** die Niedrigreflexionsfläche (20) ferner eine von der Anzeigeeinheit (1) beabstandeten hinteren Abschnitt umfaßt, und daß sich die Niedrigreflexionsfläche (20) gegenüber der Horizontalen in einem vorbestimmten Winkel vom hinteren Abschnitt zu deren vorderen Abschnitt nach unten erstreckt.

3. Einrichtung zur Minderung von Reflexion nach Anspruch 1 oder 2, **dadurch gekennzeichnet, daß** die Niedrigreflexionsfläche (20) Einkerbungen umfaßt.

4. Einrichtung zur Minderung von Reflexion nach einem der voranstehenden Ansprüche, **dadurch gekennzeichnet, daß** die Niedrigreflexionsfläche (20) eine matte schwarze Farbe umfaßt.

## Revendications

1. Dispositif servant à minimiser les réflexions, comprenant une unité d'affichage (1), sur laquelle se trouve une surface d'affichage (10), un cadre (21) placé en une position noyée dans la surface supérieure de la planche de bord d'un véhicule, ladite unité d'affichage (1) étant conçue pour une utilisation en position sensiblement verticale et ladite surface d'affichage (10) étant inclinée vers le bas d'un petit angle aigu (β) par rapport à la verticale, et une surface (20) qui est une surface à faible réflexion servant à minimiser les réflexions des faisceaux lumineux incidents, ladite surface (20) étant disposée à la fois en-dessous et en face de ladite surface d'affichage (10) et faisant un angle aigu par rapport à elle quand ladite unité d'affichage (1) est placée dans sa position sensiblement verticale, dans lequel ladite position sensiblement verticale de ladite unité d'affichage (1) est choisie de telle sorte qu'un axe imaginaire s'étendant perpendiculairement à ladite surface d'affichage (10) soit placé de manière à couper un plan défini par ladite surface (20) à faible réflexion, et dans lequel ladite unité d'affichage (1) comprend une partie inférieure et une partie supérieure et ladite surface (20) comprend une partie avant qui est sensiblement adjacente à ladite partie inférieure de ladite unité d'affichage (1).

2. Dispositif servant à minimiser les réflexions selon la revendication 1, **caractérisé en ce que** ladite surface (20) à faible réflexion comprend en outre une partie arrière espacée de ladite unité d'affichage (1) et **en ce que** ladite surface (20) à faible réflexion s'étend suivant un angle prédéterminé vers le bas par rapport à l'horizontale, de ladite partie arrière à ladite partie avant.

3. Dispositif servant à minimiser les réflexions selon l'une ou l'autre des revendications 1 ou 2, **caractérisé en ce que** ladite surface (20) à faible réflexion comporte des stries.

4. Dispositif servant à minimiser les réflexions selon l'une quelconque des précédentes revendications, **caractérisé en ce que** ladite surface (20) à faible réflexion a une couleur noire mate.
